# FASCICULE DE BREVET EUROPEEN

(11) **EP 2 588 212 B1**
(45) Date de publication et mention de la délivrance du brevet: **25.04.2018**
(21) Numéro de dépôt: 11728302.8
(22) Date de dépôt: 30.06.2011
(51) Int. Cl.: B01D 33/11, C02F 3/08

(54) **DISPOSITIF DE TRAITEMENT D'EAU COMPRENANT UN TAMBOUR FILTRANT PLEIN**
VORRICHTUNG ZUR WASSERBEHANDLUNG UMFASSEND EINE GESCHLOSSENE FILTERTROMMEL
APPARATUS FOR WATER TREATMENT COMPRISING A CLOSED FILTER DRUM

(30) Priorité: 02.07.2010 FR 1055348
(43) Date de publication de la demande: 08.05.2013
(73) Titulaire: Veolia Water Solutions & Technologies Support, 94417 Saint-Maurice Cedex (FR)
(72) Inventeur: SCHMITT, Thomas, F-73100 Trevignin (FR); HERTFELDER, Nikolaï, 74592 Kirchberg (DE)
(74) Mandataire: Vidon Brevets & Stratégie
(86) Numéro de dépôt international: PCT/EP2011/061079
(87) Numéro de publication internationale: WO 2012/001136

(56) Documents cités:
- EP-A1- 0 383 527
- EP-A1- 1 568 662
- EP-A1- 1 584 606
- AT-B- 376 582
- DE-A1- 3 831 684
- FR-A1- 2 238 676
- FR-A1- 2 444 489
- FR-A1- 2 916 436
- US-A- 4 090 965

## Description

### 1. Domaine de l'invention

Le domaine de l'invention est celui des installations mises en oeuvre pour assurer le traitement biologique des eaux usées.

Plus précisément, l'invention concerne une installation de traitement d'eau comprenant une zone de traitement biologique logeant des disques biologiques suivie d'une zone de filtration logeant un tambour filtrant.

### 2. Art antérieur

FR 2 238 676 A divulgue un dispositif de traitement d'eau comprenant une zone de traitement biologique suivie d'une zone de filtration mécanique. La zone de traitement biologique comporte un corps immergé à disques et la zone de filtration loge un tambour cribleur. Un appareil d'arrosage est placé à l'extérieur du tambour et des impuretés enlevées par rinçage sont évacuées hors de l'intérieur du tambour par l'intermédiaire d'un écoulement.

EP 0 383 527 A décrit un tambour filtrant dont les faces latérales sont couvertes par des parois latérales et qui contient à son intérieur une trémie collectrice pour collecter les boues détachées de la surface du tambour au jet d'eau.

La demande de brevet français portant le numéro FR-A1-2 916 436, déposée par la Demanderesse, décrit une installation de traitement d'eau comprenant une zone de traitement biologique logeant des disques biologiques suivie d'une zone de filtration logeant un tambour filtrant.

Plus précisément, une telle installation comprend une zone de traitement biologique logeant une pluralité de disques biologiques montés sur un arbre susceptible d'être entraîné à rotation.

Une eau brute est acheminée dans cette zone de façon à être traitée biologiquement au contact des disques biologiques.

Cette zone de traitement biologique est suivie d'une zone de filtration logeant un tambour filtrant monté dans le même axe que lesdits disques biologiques. Une canalisation permet d'acheminer gravitairement une eau traitée biologiquement provenant de la zone de traitement biologique à l'intérieur du tambour filtrant.

Un côté du tambour filtrant est solidaire de l'axe sur lequel sont montés les disques biologiques. L'autre côté est muni d'un rail accolé au tambour filtrant avec lequel coopèrent quatre roulettes solidaires du bâti de l'installation. Le tambour filtrant peut ainsi être entraîné en rotation par l'axe des disques biologiques de façon à filtrer l'eau provenant de la zone de traitement biologique.

Les boues issues de cette filtration sont retenues sur la surface intérieure du tambour filtrant, alors qu'une eau filtrée s'écoule à travers le tambour filtrant vers le fond de cette zone de filtration.

Une rampe placée à l'extérieur du tambour filtrant permet d'injecter de l'eau et/ou de l'air à la surface du tambour filtrant en vue de le décolmater. Une goulotte est placée à l'intérieur du tambour filtrant en regard de la rampe pour recueillir les boues issues du décolmatage. Une canalisation reliée à la goulotte permet d'évacuer ces boues en dehors du tambour filtrant.

Une telle installation est avantageuse en ce qu'elle permet de traiter efficacement et dans un espace réduit les eaux usées de petites et moyennes collectivités regroupant par exemple entre 100 et 10 000 habitants. Sa mise en oeuvre présente néanmoins quelques inconvénients.

### 3. Inconvénients de l'art antérieur

Notamment, les deux côtés du tambour filtrant sont ouverts. On peut ainsi observer, lors de la mise en oeuvre d'une telle installation, des projections d'eau traitée biologiquement en dehors du tambour filtrant.

L'eau traitée biologiquement qui est projetée en dehors du tambour filtrant tombe en partie directement dans le fond de la zone de filtration. L'eau filtrée recueillie au fond de cette zone de filtration peut ainsi être mélangée avec de l'eau traitée biologiquement mais non filtrée, ce qui tend à diminuer sa qualité.

Une autre partie de l'eau traitée biologiquement projetée en dehors du tambour filtrant s'égoutte sur le rail de guidage du tambour filtrant ainsi que sur les roulettes qui coopèrent avec lui. Ces éléments ont alors tendance d'une part à s'encrasser et à s'oxyder. D'autre part, on observe une usure prématurée de ces moyens de guidage en rotation du tambour filtrant. Il est donc nécessaire de procéder régulièrement au nettoyage du rail et au remplacement des roulettes. Ces opérations de maintenance imposent en outre d'arrêter le traitement de l'eau. L'entretien d'une telle installation représente donc un poste de coût non négligeable et induit une baisse de la productivité. Dans certains cas rares, en particulier lorsque les exploitants ne réalisent pas de manière régulière et rigoureuse ces campagnes de maintenance, les roulettes peuvent rompre ce qui peut induire des dégâts plus conséquents, notamment l'arrêt de l'installation. Un tel arrêt peut conduire au déversement dans le milieu naturel d'eaux usées non-traitées. Il peut encore engendrer un développement non uniforme des microorganismes à la surface des disques biologiques, ceux-ci ayant en effet tendance à se développer davantage sur la portion immergée des disques biologiques que sur leur portion émergée. Ceci entraîne un phénomène de balourd lors de la remise en route de l'installation.

Un autre inconvénient de cette technique de l'art antérieur est lié au fait que la goulotte placée à l'intérieur du tambour filtrant pour recueillir les boues issues du décolmatage du tambour filtrant est montée de manière fixe à l'intérieur de celui-ci. Toutefois, les tolérances dimensionnelles de ce type d'installations sont relativement importantes. Il peut ainsi arriver que, après que l'installation a été assemblée, la goulotte ne se trouve pas parfaitement en regard de la rampe placée à l'extérieur du tambour filtrant. Ainsi, au cours du décolmatage, seule une partie des boues décrochées du tambour filtrant sont évacuées en dehors de celui-ci. Le reste des boues ainsi décrochées retombe en partie directement sur la surface intérieure du tambour filtrant, et est en partie projeté en dehors du tambour filtrant avec pour conséquences celles qui ont été évoquées plus haut.

### 4. Objectifs de l'invention

Par conséquent, l'invention a notamment pour objectif de pallier ces inconvénients de l'art antérieur.

Plus précisément, un objectif de l'invention est de fournir, dans au moins un mode de réalisation, une installation de traitement d'eau comprenant des disques biologiques suivis d'un tambour filtrant dont la mise en oeuvre requiert peu de campagnes de maintenance.

En particulier, l'invention poursuit l'objectif, dans au moins un mode de réalisation, de procurer une telle technique qui soit robuste.

Un autre objectif de l'invention est de mettre en oeuvre, dans au moins un mode de réalisation, une telle technique qui permet d'améliorer, comparativement à la technique selon l'art antérieur, la qualité de l'eau traitée produite.

L'invention a encore pour objectif de procurer, dans au moins un mode de réalisation de l'invention, une telle technique qui permette d'optimiser le décolmatage du tambour filtrant.

En ce sens, l'invention vise notamment, dans au moins un mode de réalisation, à augmenter la quantité de boues recueillie lors du décolmatage du tambour filtrant de façon à les évacuer en dehors de ce dernier.

Un autre but de l'invention est encore de fournir, dans au moins un mode de réalisation, une telle technique qui soit simple et économique à mettre en oeuvre.

### 5. Exposé de l'invention

Ces objectifs, ainsi que d'autres qui apparaîtront par la suite, sont atteints à l'aide d'un dispositif de traitement d'eau comprenant :
- une zone de traitement biologique logeant une pluralité de disques biologiques montés sur un arbre susceptible d'être entraîné à rotation,
- une zone de filtration logeant un tambour filtrant monté sur le même axe que lesdits disques biologiques,
- des moyens d'acheminement d'une eau traitée biologiquement provenant de ladite zone de traitement biologique à l'intérieur dudit tambour filtrant,
- des moyens de décolmatage dudit tambour filtrant placés à l'extérieur dudit tambour filtrant,
- des moyens de collecte de boues placés à l'intérieur dudit tambour filtrant face auxdits moyens de décolmatage et reliés à une canalisation d'évacuation desdites boues en dehors dudit tambour filtrant.

Selon l'invention, les côtés dudit tambour filtrant sont fermés par des flancs pleins, et ladite canalisation d'évacuation comprend une portion qui s'étend dans l'axe dudit arbre à travers un premier desdits flancs monté à rotation autour de celle-ci, le second flanc dudit tambour filtrant étant solidaire dudit arbre.

Lesdits moyens de collecte de boues sont montés en rotation autour dudit axe en regard de la surface intérieure dudit tambour filtrant.

Ainsi, l'invention repose sur une approche tout à fait originale qui consiste à mettre en oeuvre un tambour filtrant dont les côtés sont refermés par des flancs pleins, l'un de ses flancs étant solidaire de l'arbre sur lequel sont montés les disques biologiques, l'autre étant traversé en son centre par la canalisation d'évacuation des boues provenant du décolmatage et sur laquelle il est guidé en rotation.

Du fait que les côtés du tambour filtrant sont fermés, aucune projection en dehors du tambour filtrant d'eau seulement traitée biologiquement et de boues provenant du décolmatage ne peut être observée.

Ainsi, cette mise en oeuvre permet notamment :
- d'éviter une détérioration rapide des moyens de guidage en rotation du tambour filtrant ;
- de réduire la fréquence de mise en oeuvre d'opérations de maintenance ;
- d'augmenter la productivité ;
- d'améliorer la qualité de l'eau traitée produite.

Selon un mode de réalisation préférentiel, ledit premier flanc d'un tambour filtrant d'un dispositif selon l'invention est monté mobile en rotation autour de ladite portion de canalisation d'évacuation au moyen d'un palier étanche.

Cette mise en oeuvre permet de prolonger encore davantage la durée de vie des moyens de guidage en rotation du tambour filtrant, et de réduire par conséquent la fréquence de mise en oeuvre des opérations nécessaires à sa maintenance.

Dans ce cas, ledit palier étanche comprend de manière avantageuse au moins un élément de roulement et deux demie-coques, lesdites deux demie-coques définissant un logement pour ledit au moins un élément de roulement.

Il est ainsi possible d'accéder de manière aisée à l'élément de roulement placé à l'intérieur des deux demie-coques pour assurer de manière simple sa maintenance.

Également dans ce cas lesdites demie-coques sont préférentiellement réalisés en matière plastique.

De telles demie-coques peuvent ainsi être obtenues de manière simple et économique tout en résistant bien à la corrosion et en étant très légères.

Selon une caractéristique préférentielle, un dispositif selon l'invention comprend des moyens d'introduction d'un lubrifiant neuf à l'intérieur dudit palier étanche.

Il comprend également avantageusement dans ce cas des moyens d'évacuation d'un lubrifiant usagé depuis l'intérieur dudit palier étanche.

Il est ainsi possible de remplacer facilement la substance lubrifiante introduite dans le palier afin d'assurer sa durée de vie.

Lesdits moyens de collecte de boues d'un dispositif selon l'invention sont montés mobiles en rotation autour dudit axe en regard de la surface intérieure dudit tambour filtrant.

Ainsi, lors de l'assemblage d'un dispositif selon l'invention, il est possible d'ajuster la position des moyens de collecte de boues par rapport aux moyens de décolmatage de façon telle qu'ils soient placés parfaitement en regard les uns des autres. On maximise ainsi la quantité de boues recueillie et extraite du tambour filtrant lors du décolmatage.

Dans ce cas, lesdits moyens de collecte de boues comprennent de manière préférée une goulotte, ladite goulotte étant reliée à ladite portion de canalisation au moyen d'un bras dont une extrémité est solidarisée à ladite goulotte et l'autre extrémité est montée mobile en rotation sur ladite portion de canalisation.

Une telle architecture est simple de conception mais efficace et particulièrement robuste.

Selon une caractéristique avantageuse, ladite goulotte affleure la surface intérieure dudit tambour filtrant.

Ceci participe également à maximiser la quantité de boues recueillie et extraite du tambour filtrant lors du décolmatage.

Selon une autre caractéristique avantageuse, ladite goulotte présente une section en forme de « V », l'entrée de ladite canalisation d'évacuation débouchant au fond dudit « V ».

Cette mise en oeuvre permet de faciliter l'évacuation des boues en dehors de la goulotte et d'éviter que celle-ci ne déborde au cours du décolmatage du tambour filtrant.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre une vue de côté d'un exemple d'un dispositif de traitement d'eau selon l'invention ;
- la figure 2 illustre une vue de détail de la zone de filtration du dispositif de traitement d'eau représenté à la figure 1 ;
- la figure 3 illustre une section de deux demie-coques selon l'invention.

### 7. Description d'un mode de réalisation de l'invention

### 7.1. Rappel du principe de l'invention

Le principe général de l'invention repose sur la mise en oeuvre d'un tambour filtrant dont les côtés sont refermés par des flancs pleins, l'un de ses flancs étant solidaire d'un arbre placé en amont sur lequel sont montés les disques biologiques, l'autre étant traversé en son centre par la canalisation d'évacuation des boues provenant du décolmatage et sur laquelle il est guidé en rotation.

Une telle mise en oeuvre permet d'éviter la projection en dehors du tambour filtrant d'eau seulement traitée biologiquement et de boues provenant du décolmatage et par conséquent :
- d'éviter une détérioration rapide des moyens de guidage en rotation du tambour filtrant ;
- de réduire la fréquence de mise en oeuvre d'opérations de maintenance ;
- d'augmenter la productivité ;
- d'améliorer la qualité de l'eau traitée produite.

### 7.2. Exemple d'un dispositif de traitement d'eau selon l'invention

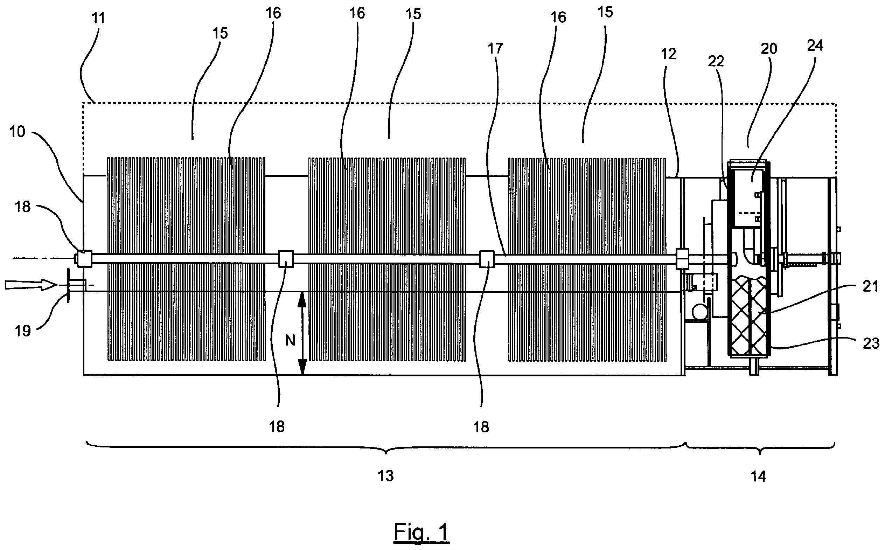

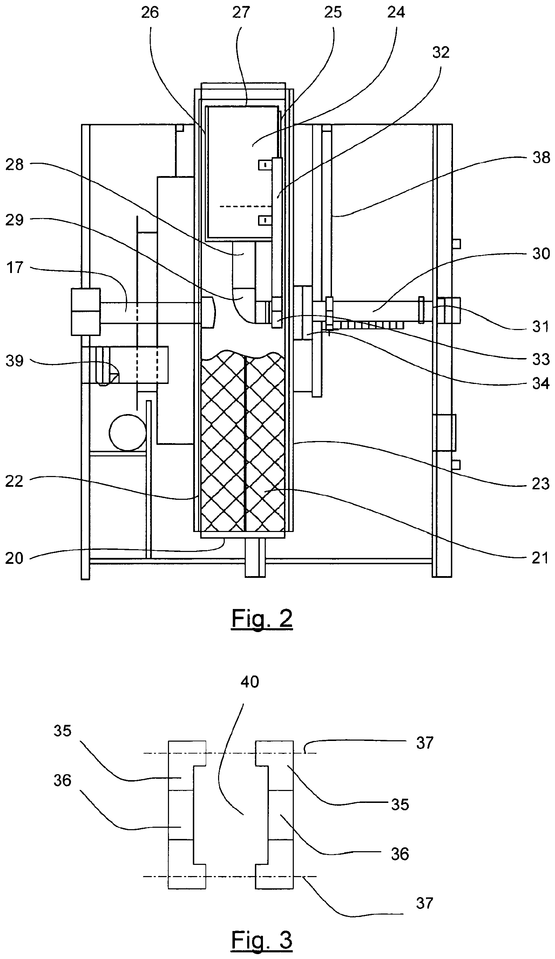

On présente, en relation avec les figures 1 et 2, un mode de réalisation d'un dispositif de traitement d'eau selon l'invention.

Ainsi que cela apparaît sur ces figures 1 et 2, un tel dispositif de traitement d'eau comprend une cuve 10 essentiellement parallélépipédique refermée en partie supérieure par un couvercle amovible 11. Cette cuve 10 loge une paroi verticale 12 qui y délimite une zone de traitement biologique 13 et une zone de filtration 14.

La zone de traitement biologique 13 loge des lots 15 d'une pluralité de disques biologiques 16.

Les disques biologiques 16 sont montés sur un arbre 17 guidé en rotation par rapport à la cuve 10 du dispositif au moyen de paliers 18.

L'arbre 17 est susceptible d'être entraîné en rotation autour de son axe au moyen d'un moteur non représenté.

Une canalisation d'entrée d'eau à traiter 19 débouche dans la zone de traitement biologique 13.

La zone de filtration 14 loge un tambour filtrant 20. La circonférence de ce tambour filtrant 20 comprend un tamis 21. Le tambour filtrant 20 s'étend dans le même axe que les disques biologiques 16. Ses côtés sont fermés par des flancs pleins 22, 23.

Une canalisation 39 permet d'acheminer l'eau provenant de la zone de traitement biologique 13 à l'intérieur du tambour filtrant 20.

Des moyens de décolmatage du tambour filtrant 20, non représentés, comprennent une rampe d'injection d'air et/ou d'eau. Cette rampe s'étend à l'extérieur du tambour filtrant 20 tout le long de sa largeur, à proximité de sa surface extérieure et parallèlement à son axe.

Des moyens de collecte de boues, qui dans ce mode de réalisation comprennent une goulotte 24, sont logés dans le tambour filtrant 20.

Cette goulotte 24 présente une section en forme de « V ». Ses faces latérales 25, 26 affleurent les flancs 22, 23 du tambour filtrant 20. La surface délimitée par son contour supérieur 27 affleure la surface intérieure du tamis 21.

Des moyens d'évacuation permettent d'évacuer le contenu de la goulotte 24 en dehors du tambour filtrant 20. Ces moyens d'évacuation comprennent une première portion de canalisation d'évacuation 28 qui coopère avec la sortie de la goulotte 24 ménagée au fond du « V » et s'étend en direction de l'axe du tambour filtrant 20 pour déboucher dans un coude 29. Ce coude 29 débouche dans une deuxième portion de canalisation d'évacuation 30 qui s'étend dans l'axe de l'arbre 17 et débouche à l'extérieur de la cuve 10.

La deuxième portion de canalisation 30 est solidarisée dans la région de sa sortie 31 à la paroi de la cuve 10. Elle est maintenue en amont au moyen d'une barre 38 dont l'extrémité inférieure est solidaire de la deuxième portion de canalisation 30 et l'extrémité supérieure est solidaire de la cuve 10 du dispositif.

La goulotte 24 est reliée à une extrémité d'un bras 32. L'autre extrémité de ce bras 32 est solidarisée à rotation à la deuxième portion de canalisation 30 au moyen d'une bride de serrage 33.

La bride de serrage 33 peut être momentanément desserrée par un opérateur pour lui permettre de faire tourner la goulotte 24 autour de la deuxième portion de canalisation 30 afin de régler la position de la goulotte 24 par rapport à la rampe. Une fois que la goulotte 24 est positionnée à l'intérieur du tambour filtrant 20 de manière telle qu'elle soit en regard de la rampe, l'opérateur peut resserrer la bride de serrage 33 de façon à maintenir la goulotte 24 en position.

Le flanc plein 22, qui est tourné vers la zone de traitement biologique 13, est solidaire, en son centre, de l'extrémité de l'arbre 17.

Le flanc plein 23 est traversé en son centre par une lumière à travers laquelle passe la deuxième portion de canalisation 30. Il est monté à rotation autour de cette deuxième portion de canalisation 30 au moyen d'un palier 34.

La mise en rotation de l'arbre 17 au moyen du moteur permet ainsi d'entraîner en rotation les disques biologiques 16 et le tambour filtrant 20.

Dans ce mode de réalisation, le palier 34 est un palier étanche. Il comprend deux demie-coques 35.

Chaque demie-coque 35 présente un contour extérieur cylindrique et, comme cela est représenté sur la figure 3, une section en forme de « U ». Elle est traversée en son centre par une ouverture 36, et à sa périphérie par une pluralité de perçages 37 répartis de manière uniforme le long d'un cercle concentrique à ladite demie-coque 35. Les deux demie-coques 35 sont réalisées en polypropylène. Dans des variantes, d'autres matières adaptées pourront être mises en oeuvre. Les deux demie-coques 35 sont destinées à être solidarisées l'une à l'autre pour former un logement intérieur étanche 40 apte à recevoir un élément de roulement comme par exemple un roulement à rotules à deux rangées de rouleaux (non représentés). Les ouvertures 36 permettent le passage de la deuxième portion de canalisation 30.

Le palier 34 est assemblé de la manière suivante. Un élément de roulement (non représenté) est logé dans une demie-coque 35. Une deuxième demie-coque 35 est rapportée sur la première, un joint non représenté étant intercalé entre ces deux éléments. Le palier 34 est alors solidarisé au flanc 23 du tambour filtrant 20 au moyen de vis traversant les perçages 37 et coopérant avec des écrous solidaires du flanc 23.

Le palier 34 comprend des moyens d'introduction d'un lubrifiant neuf à l'intérieur du logement 40 dans lequel est placé l'élément de roulement. Dans ce mode de réalisation, ces moyens d'introduction comprennent un graisseur (non représenté) avec lequel un opérateur peut faire coopérer une pompe à graisse. Le graissage est préférentiellement effectué avant la première mise en service du dispositif, puis une fois par an (maintenance annuelle). Le palier 34 comprend également des moyens d'évacuation d'un lubrifiant usagé présent dans ce logement 40. Dans ce mode de réalisation, ils comprennent une vis vissée dans un logement de forme complémentaire débouchant dans le logement 40 où se situe l'élément de roulement, un joint étant interposé entre la tête de la vis et le demi-palier 35 dans lequel elle est logée.

## Revendications

1. Dispositif de traitement d'eau comprenant :
- une zone de traitement biologique (13) logeant une pluralité de disques biologiques (16) montés sur un arbre (17) susceptible d'être entraîné à rotation,
- une zone de filtration (14) logeant un tambour filtrant (20) monté sur le même axe que lesdits disques biologiques (16),
- des moyens d'acheminement (39) d'une eau traitée biologiquement provenant de ladite zone de traitement biologique (13) à l'intérieur dudit tambour filtrant (20),
- des moyens de décolmatage dudit tambour filtrant (20) placés à l'extérieur dudit tambour filtrant (20),
- des moyens de collecte de boues (24) placés à l'intérieur dudit tambour filtrant (20) face auxdits moyens de décolmatage et reliés à une canalisation d'évacuation (28, 29, 30) desdites boues en dehors dudit tambour filtrant (20),
**caractérisé en ce que** les côtés dudit tambour filtrant (20) sont fermés par des flancs pleins (22, 23), et **en ce que** ladite canalisation d'évacuation (28, 29, 30) comprend une portion (30) qui s'étend dans l'axe dudit arbre (17) à travers un premier desdits flancs (23) monté à rotation autour de celle-ci, le second flanc (22) dudit tambour filtrant (20) étant solidaire dudit arbre (17),
et **en ce que** lesdits moyens de collecte de boues (24) sont montés mobiles en rotation autour dudit axe en regard de la surface intérieure dudit tambour filtrant (20).

2. Dispositif selon la revendication 1, **caractérisé en ce que** ledit premier flanc (23) est monté mobile en rotation autour de ladite portion de canalisation d'évacuation (30) au moyen d'un palier étanche (34).

3. Dispositif selon la revendication 2, **caractérisé en ce que** ledit palier étanche (34) comprend deux demie-coques (35) et au moins un élément de roulement, lesdites deux demie-coques (35) définissant un logement (40) pour ledit au moins un élément de roulement.

4. Dispositif selon la revendication 3, **caractérisé en ce que** lesdites demie-coques (35) sont réalisées en matière plastique.

5. Dispositif selon l'une quelconque des revendications 2 à 4, **caractérisé en ce qu'**il comprend des moyens d'introduction d'un lubrifiant neuf à l'intérieur dudit palier étanche (34).

6. Dispositif selon la revendication 5, **caractérisé en ce qu'**il comprend des moyens d'évacuation d'un lubrifiant usagé depuis l'intérieur dudit palier étanche (34).

7. Dispositif selon l'une quelconque des revendications 1 à 6, **caractérisé en ce que** lesdits moyens de collecte de boues comprennent une goulotte (24), ladite goulotte (24) étant reliée à ladite portion de canalisation (30) au moyen d'un bras (32) dont une extrémité est solidarisée à ladite goulotte (24) et l'autre extrémité est montée mobile en rotation sur ladite portion de canalisation (30).

8. Dispositif selon la revendication 7, **caractérisé en ce que** ladite goulotte (24) affleure la surface intérieure dudit tambour filtrant (20).

9. Dispositif selon l'une quelconque des revendications 7 ou 8, **caractérisé en ce que** ladite goulotte (24) présente une section en forme de « V », l'entrée de ladite canalisation d'évacuation (28, 29, 30) débouchant au fond dudit « V ».

## Patentansprüche

1. Wasserbehandlungsvorrichtung, die Folgendes aufweist:
- eine biologische Behandlungszone (13), die mehrere Scheibentauchkörper (16) beherbergt, welche auf einem Schaft (17) gelagert sind, der drehbar angetrieben werden kann,
- eine Filtrationszone (14), die eine Filtertrommel (20) beherbergt, die auf der gleichen Achse gelagert ist wie die Scheibentauchkörper (16),
- Einrichtungen zum Zuführen (39) von biologisch behandeltem Wasser aus der biologischen Behandlungszone (13) in das Innere der Filtertrommel (20),
- Einrichtungen zum Beseitigen von Verstopfungen der Filtertrommel (20), die außerhalb der Filtertrommel (20) angeordnet sind,
- Einrichtungen zum Sammeln von Schlamm (24), die im Inneren der Filtertrommel (20) angeordnet sind, gegenüber den Einrichtungen zur Beseitigung von Verstopfungen, und mit einer Abflussleitung (28, 29, 30) des Schlamms nach außen der Filtertrommel (20) verbunden sind,
**dadurch gekennzeichnet, dass** die Seiten der Filtertrommel (20) von festen Seitenwänden (22, 23) umschlossen sind, und dass die Abflussleitung (28, 29, 30) einen Abschnitt (30) aufweist, der sich in der Achse des Schafts (17) durch eine erste der Seitenwände (23) erstreckt, die um diesen Abschnitt drehbeweglich gelagert ist, wobei die zweite Seitenwand (22) der Filtertrommel (20) an dem Schaft (17) befestigt ist,
und dadurch, dass die Einrichtungen zum Sammeln von Schlamm (24) drehbeweglich um die Achse gegenüber der Innenfläche der Filtertrommel (20) gelagert sind.

2. Vorrichtung nach Anspruch 1, **dadurch gekennzeichnet, dass** die erste Seitenwand (23) um den Abschnitt der Abflussleitung (30) drehbeweglich gelagert ist, mit Hilfe eines abgedichteten Lagers (34).

3. Vorrichtung nach Anspruch 2, **dadurch gekennzeichnet, dass** das abgedichtete Lager (34) zwei Halbschalen (35) und mindestens ein Kugellager aufweist, wobei die beiden Halbschalen (35) ein Gehäuse (40) für das mindestens eine Kugellager bilden.

4. Vorrichtung nach Anspruch 3, **dadurch gekennzeichnet, dass** die Halbschalen (35) aus Kunststoff gefertigt sind.

5. Vorrichtung nach einem der Ansprüche 2 bis 4, **dadurch gekennzeichnet, dass** sie Einrichtungen zum Einführen von frischem Schmiermittel in das Innere des abgedichteten Lagers (34) aufweist.

6. Vorrichtung nach Anspruch 5, **dadurch gekennzeichnet, dass** sie Einrichtungen zum Ablassen von gebrauchtem Schmiermittel aus dem Inneren des abgedichteten Lagers (34) aufweist.

7. Vorrichtung nach einem der Ansprüche 1 bis 6, **dadurch gekennzeichnet, dass** die Vorrichtungen zum Sammeln von Schlamm eine Rinne (24) aufweisen, wobei die Rinne (24) mittels eines Armes (32) mit dem Abschnitt der Abflussleitung (30) verbunden ist, dessen eines Ende an der Rinne (24) befestigt ist und dessen anderes Ende drehbeweglich an dem Abschnitt der Abflussleitung (30) gelagert ist.

8. Vorrichtung nach Anspruch 7, **dadurch gekennzeichnet, dass** die Rinne (24) bündig mit der Innenfläche der Filtertrommel (20) ist.

9. Vorrichtung nach einem der Ansprüche 7 oder 8, **dadurch gekennzeichnet, dass** die Rinne (24) einen "V"-förmigen Abschnitt aufweist, wobei der Eingang der Abflussleitung (28, 29, 30) am Boden des "V" mündet.

## Claims

1. Device for treating water comprising:
- a biological treatment zone (13) housing a plurality of biological disks (16) mounted on a shaft (17) capable of being driven in rotation,
- a filtering zone (14) housing a filter drum (29) mounted on the same axis as said biological disks (16),
- means for conveying (39) a biologically treated water coming from said biological treatment zone (13) into said filter drum (20),
- means for unclogging said filter drum (20) placed outside said filter drum (20),
- means for collecting sludges (24) placed inside said filter drum (20) facing said unclogging means and connected to a piping (28, 29, 30) for discharging said sludges outside said filter drum (20),
**characterized in that** the sides of said filter drum (20) are closed by solid sidewalls (22, 23) and **in that** said piping for discharging (28, 29, 30) comprises a portion (30) that extends in the axis of said shaft (17) through a first of said sidewalls (23) mounted in rotation around this axis, the second sidewall (22) of said filter drum (20) being fixedly joined to said shaft (17),
and **in that** said means for collecting sludges (24) are mounted so as to be mobile in rotation about said axis facing the inner surface of said filter drum (20).

2. Device according to claim 1, **characterized in that** said first sidewall (23) is mounted so as to be mobile in rotation about said portion of piping for discharging (30) by means of a sealed bearing (34).

3. Device according to claim 2, **characterized in that** said sealed bearing (34) comprises two half-shells (35) and at least one roller-bearing element, said two half-shells defining a housing for said at least one roller-bearing element.

4. Device according to claim 3, **characterized in that** said half-shells (35) are made out of plastic.

5. Device according to any one of the claims 2 to 4, **characterized in that** it comprises means for introducing a fresh lubricant into said sealed bearing (34).

6. Device according to claim 5, **characterized in that** it comprises means for discharging a used lubricant from the interior of said sealed bearing (34).

7. Device according to any of claims 1 to 6, **characterized in that** said means for collecting sludges preferably comprise a chute (24), said chute (24) being connected to said piping portion (30) by means of an arm (32), one end of which is fixedly joined to said chute (24), and the other end of which is mounted so as to be mobile in rotation on said piping portion (30).

8. Device according to claim 7, **characterized in that** said chute (24) is flush with the inner surface of said filter drum (24).

9. Device according to any one of the claims 7 or 8, **characterized in that** said chute (24) has a "V"-shaped section, the inlet of said piping for discharging (28, 29, 30) opening into the bottom of said "V".
